# EUROPÄISCHE PATENTSCHRIFT

(11) **EP 0 825 806 B1**
(45) Veröffentlichungstag und Bekanntmachung des Hinweises auf die Patenterteilung: **27.03.2002**
(21) Anmeldenummer: 97112618.0
(22) Anmeldetag: 23.07.1997
(51) Int. Cl.: H05B 39/04, H02M 7/5383, H02H 7/122

(54) **Schaltungsanordnung zum Betreiben von elektrischen Glühlampen**
Circuit for operating incandescent lamps
Circuit pour alimenter des lampes à incandescence

(30) Priorität: 19.08.1996 DE 19633372
(43) Veröffentlichungstag der Anmeldung: 25.02.1998
(73) Patentinhaber: Patent-Treuhand-Gesellschaft für elektrische Glühlampen mbH, 81543 München (DE)
(72) Erfinder: Kiermeier, Theodor, 81475 München (DE)

(56) Entgegenhaltungen:
- EP-A- 0 647 084
- EP-A- 0 707 436
- EP-B- 0 264 765
- DE-A- 4 011 742
- DE-A- 4 201 744
- DE-A- 4 242 120
- DE-A- 4 436 465
- GB-A- 2 204 191

## Beschreibung

### Technisches Gebiet

Die Erfindung betrifft eine Schaltungsanordnung zum Betreiben von elektrischen Glühlampen, insbesondere von Niedervolt-Halogenglühlampen gemäß dem Oberbegriff des Anspruchs 1.

Diese Art von Schaltungsanordnungen enthält als Hauptbestandteil einen selbsterregten stromrückgekoppelten Wechselrichter in Halbbrückenschaltung, der die niederfrequente Netzspannung oder Gleichspannung der elektrischen Versorgung in eine hochfrequente Spannung zerhackt. Diese wird mit Hilfe eines Leistungsübertragers auf die Niederspannung der beispielsweise zu verwendenden Halogenglühlampen transformiert, also auf üblicherweise 6, 12 oder 24 V. Solche Schaltungsanordnungen werden deshalb auch als elektronische Transformatoren oder elektronische Konverter bezeichnet. Eine detailliertere Erläuterung der Funktionsweise elektronischer Konverter ist beispielsweise in der EP 0 264 765 B1 und der DE-40 11 742 A1 offenbart.

Um sowohl im Überlast- als auch im Kurzschlußfall, d.h. bei unzulässig niederohmiger Last, beispielsweise verursacht durch Parallelschalten mehrerer Lampen bzw. durch Kurzschließen der Lampenzuleitungen, eine Selbstzerstörung der Schaltungsordnung mit einher gehender Brandgefahr sowie Gefährdung von Personen zu verhindern, ist eine entsprechende Schutzeinrichtung unerläßlich. Für diesen Zweck ist zunächst eine Detektorschaltung erforderlich, welche im Überlast- bzw. Kurzschlußfall ein geeignetes Detektionssignal liefert. Der Kürze wegen wird diese Schaltung im folgenden auch als Überlast-Detektorschaltung bezeichnet. Das Detektionssignal dient dann als Steuersignal für einen Abschaltkreis, welcher den elektronischen Konverter zumindest vorübergehend abschaltet.

Nach der Abschaltung muß die hochfrequente Schwingung des Wechselrichters erneut initiiert werden. Gewöhnlich enthalten elektronische Konverter einen Start- oder Triggergenerator, der diese Aufgabe übernimmt. Andernfalls muß der elektronische Konverter kurzzeitig von der Versorgungsspannung getrennt werden. Nach erneutem Anlegen der Versorgungsspannung schwingt der Wechselrichter wieder an.

### Stand der Technik

Aus der DE 42 42 120 A1 ist ein selbstschwingender Wechselrichter in Halbbrückenschaltung für eine Niedervoltlampe mit einer Schutzschaltung und einem Strommeßglied bekannt. Das Strommeßglied besteht im wesentlichen aus vier Widerständen und einer Zenerdiode, die zwischen die Source des unteren Halbbrücken-Feldeffekttransistors und dem Bezugspotentials geschaltet ist. Nachteilig bei dieser Lösung ist, daß das Strommeßglied relativ viele Bauelemente benötigt. Außerdem ist das an der Widerstandsschaltung abgegriffene Signal zur Ansteuerung der Schutzschaltung näherungsweise proportional zum Lampenstrom. Um nun überhaupt zwischen Normal- und Überlastfall diskriminieren zu können, muß die Schutzschaltung sehr steilflankig ausgelegt werden.

In der EP 0 647 084 A1 ist eine Schaltungsanordnung mit einem selbsteregten Halbbrückenwandler und einer Detektorschaltung offenbart. Die Detektorschaltung besteht aus einer Serienschaltung einer Diode und eines Widerstandes, die parallel zu dem mit Massepotential verbundenen Brückenkondensator geschaltet ist. Außerdem sind die Brückenkondensatoren und der Leistungsübertrager so dimensioniert, daß die Diode nur im Überlastfall leitend wird. Der serielle Widerstand wandelt dann den durch die Diode fließenden Strom in ein Spannungssignal, das als Detektionssignal dient und einen Abschaltkreis ansteuert. Nachteilig bei dieser Lösung ist, daß die Dimensionierung des Halbbrückenwandlers auf die Detektorschaltung abgestimmt werden muß.

Die Schrift GB 2 204 191 A offenbart eine Schaltungsanordnung mit einer Schutzschaltung zum Betreiben von Niedervolt-Glühlampen. Die Schutzschaltung umfaßt einen Schalttransistor, der parallel zum Kondensator einer Startschaltung geschaltet ist. Der Schalttransistor wird von einem ohmschen Spannungsteiler angesteuert, der seinerseits parallel zu der Gleichspannungsversorgung der Schaltungsanordnung geschaltet ist. Sobald der Schalttransistor durchschaltet, wird die Schaltungsanordnung abgeschaltet.

Die Schrift EP 0 707 436 A2 offenbart eine Schaltungsanordnung mit selbstschwingendem Halbbrückenwandler zum Betreiben von Niedervolt-Glühlampen. Eine Frequenzanpaßschaltung wirkt der unerwünschten Abnahme der Betriebsfrequenz des Wandlers mit zunehmender Anschlußlast entgegen. Die Frequenzanpaßschaltung besteht aus der Serienschaltung einer Drossel und eines Widerstandes, wobei diese Serienschaltung parallel zur Basis-Emitterstrecke eines Halbbrückentransistors geschaltet ist. Der Verbindungspunkt zwischen Drossel und Widerstand ist mit dem Fußpunkt eines Halbbrückenkondensators verbunden.

Die Schrift DE 42 01 744 A1 offenbart ebenfalls eine Schaltungsanordnung nach dem Halbbrückenwandlerprinzip mit einer Schutzschaltung zum Betreiben von Niedervolt-Glühlampen. Die Schutzschaltung weist unter anderem einen Widerstand auf, der zwischen dem Emitter eines Halbbrückentransistors und dem zugehörigen Bezugspotential geschaltet ist. Das an diesem Widerstand abgegriffene Signal steuert eine Schaltung an, die verhindert, daß sich der Kondensator einer Startschaltung lädt. Außerdem umfaßt die Schaltungsanordnung eine Zusatzschaltung, die mit dem Verbindungspunkt zwischen den Halbbrückenkondensatoren einerseits und dem Ausgang der Startschaltung andererseits verbunden ist und eine Unterbrechung der Schwingung des Wandlers am Ende jeder Netzhalbwelle bewirkt.

### Darstellung der Erfindung

Aufgabe der Erfindung ist es, diese Nachteile zu vermeiden und eine Schaltungsanordnung anzugeben, die mit möglichst wenig Bauteilen und dadurch kostengünstig im Überlast- bzw. Kurzschlußfall zuverlässig ein Detektionssignal erzeugt, das einen Abschaltkreis ansteuert.

Diese Aufgabe wird erfindungsgemäß durch die kennzeichnenden Merkmale des Anspruchs 1 gelöst. Weitere vorteilhafte Ausführungen der Erfindung sind in den Unteransprüchen erläutert.

Die Erfindung sieht vor, eine als Stromspannungswandler wirkende Impedanz, beispielsweise einen Widerstand gezielt in Serie zu einem Brückenkondensator zu schalten. Auf diese Weise wird erreicht, daß der Stromspannungswandler im Takt der Schwingung des Halbbrückenwandlers vom Lade- bzw. Entladestrom des entsprechenden Brückenkondensators durchflossen wird. Der Stromspannungswandler wandelt dieses Stromsignal in ein Spannungssignal. Dieses Spannungssignal wird zur Ansteuerung eines Abschaltkreises verwendet. Zu diesem Zwecke ist der Stromspannungswandler mit dem Abschaltkreis des elektronischen Konverters verbunden. Durch geeignete Dimensionierung des Stromspannungswandlers wird erreicht, daß der Abschaltkreis im Überlast- bzw. Kurzschlußfall den Wechselrichter zumindest vorübergehend abschaltet.

In einer einfachen Ausführung ist ein Widerstand zwischen dem mit dem Bezugspotential, z.B. dem Minuspol, des Wechselrichters verbundenen ersten Brückenkondensator und dem Bezugspotential geschaltet. Dadurch ist zwischen dem Bezugspotential und dem Verbindungspunkt von erstem Brückenkondensator und Widerstand ein dem Laststrom durch diesen ersten Brückenkondensator proportionales Spannungssignal abgreifbar, welches als Detektionssignal verwendet wird. Zu diesem Zweck ist der Verbindungspunkt mit dem Abschaltkreis kontaktiert. Diese Lösung ist besonders kostengünstig, da die Detektorschaltung lediglich diesen einen zusätzlichen Widerstand erfordert.

Der Wert des Widerstandes liegt im Bereich zwischen ca. 0,1 Ω und 10 Ω, bevorzugt im Bereich zwischen ca. 0,3 Ω und 3 Ω. Im Hinblick auf eine besonders kompakte Schaltungsanordnung ist der Widerstand bevorzugt in SMD(Surface Mounted Device)-Technik realisiert.

In einer vorteilhaften Ausführung eines Wechselrichters mit bipolaren Schalttransistoren ist der Stromspannungswandler Bestandteil der Basisbeschaltung eines der Schalttransistoren, insbesondere des mit dem Bezugspotential (Masse) verbundenen Schalttransistors. Bevorzugt ist der Stromspannungswandler der Widerstand in der parallel zur Basis-Emitter-Strecke geschalteten Serienschaltung aus Widerstand und Drossel, die in der EP 0 707 436 A2 offenbart ist. Gemäß dieser Lehre ist der Verbindungspunkt zwischen Widerstand und Drossel mit dem Fußpunkt desjenigen Brückenkondensators verbunden, der ansonsten üblicherweise direkt mit dem Bezugspotential verbunden ist. Dadurch wird einem Absinken der Arbeitsfrequenz des Wandlers im oberen Nennlastbereich entgegengewirkt. Auf diese Weise läßt sich der effizient nutzbare Bereich der Anschlußleistung ausweiten. Die vorliegende Erfindung nutzt nun diesen Widerstand zusätzlich als Stromspannungswandler zur Erzeugung des Detektionssignals. Zu diesem Zweck ist der Verbindungspunkt zwischen Widerstand und Drossel mit dem Abschaltkreis kontaktiert. Diese Lösung ist für elektronische Konverter mit einem großen Nennlastbereich, für die ohnehin die Frequenzanpaßschaltung der EP 0 707 436 A2 vorgesehen ist, besonders kostengünstig. In diesem Fall ist für die Detektorschaltung nämlich keinerlei zusätzliches elektronisches Bauelement erforderlich. Lediglich eine zusätzliche Kontaktierung zwischen dem Verbindungspunkt von Widerstand und Drossel einerseits und dem Abschaltkreis andererseits ist herzustellen.

Der Induktivitätswert der Drossel liegt im Bereich zwischen ca. 1 µH und 100 µH, bevorzugt im Bereich zwischen ca. 10 µH und 30 µH. Im Hinblick auf eine besonders kompakte Schaltungsanordnung ist die Drossel bevorzugt als Stabdrossel realisiert.

Der Abschaltkreis enthält ein Abschaltelement, beispielsweise einen Schalttransistor oder einen Thyristor, und üblicherweise eine Signalformungsschaltung zur Aufbereitung des Detektionssignals. Die Abschaltung des elektronischen Konverters erfolgt beispielsweise durch Kurzschließen des Steueranschlusses eines Schalters des Wechselrichters oder des Triggergenerators mittels des Abschaltelementes, wie z.B. in der EP 0 647 084 A1 offenbart.

### Beschreibung der Zeichnungen

Die Erfindung wird anhand der nachfolgenden Ausführungsbeispiele näher erläutert. Es zeigen
- Figur 1: ein Prinzipschaltbild eines elektronischen Konverters mit einer Überlast-Detektorschaltung für den Betrieb von Niedervolt-Halogenglühlampen,
- Figur 2: ein Prinzipschaltbild wie in Figur 1, aber zusätzlich mit einer Frequenzanpaßschaltung,
- Figur 3: ein elektrisches Schaltbild eines elektronischen Konverters mit einer Überlast-Detektor- bzw. -Schutzschaltung und mit einer Frequenzanpaßschaltung für den Betrieb von Niedervolt-Halogenglühlampen.

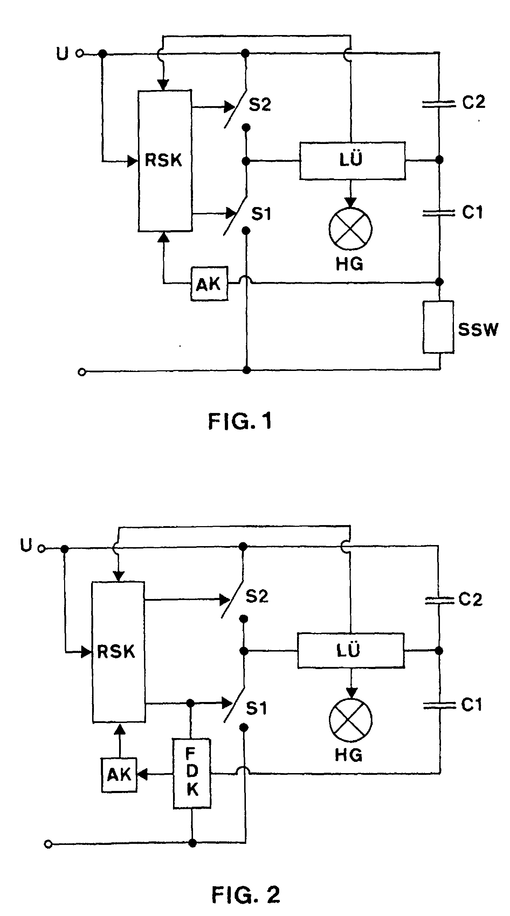

Figur 1 zeigt ein Prinzipschaltbild eines erfindungsgemäßen elektronischen Konverters mit einer Überlast-Detektorschaltung für den Betrieb von Niedervolt-Halogenglühlampen HG. Der Konverter besteht aus einem von der Versorgungsspannung U gespeisten Halbbrückenwandler mit den beiden steuerbaren Brückenschaltern S1, S2 und den beiden Brückenkondensatoren C1, C2, einem Rückkoppel- und Steuerkreis RSK zur Aufrechterhaltung der hochfrequenten Schwingung des Halbbrückenwandlers, der die Brükkenschalter S1, S2 wechselweise ansteuert und gegebenenfalls auch einen Triggergenerator (nicht explizit dargestellt) zum Wiederanschwingen des Halbbrückenwandlers beinhalten kann, einem Leistungsübertrager LÜ, der vom Halbbrückenwandler gespeist wird und einerseits mit einer Niedervolt-Halogenglühlampe HG verbunden und andererseits an den Rückkoppel- und Steuerkreis RSK gekoppelt ist, einem in Serie zu einem Brückenkondensator C1 geschalteten Stromspannungswandler SSW, der die eigentliche Detektorschaltung darstellt und einem Abschaltkreis AK, dessen Eingang mit dem Stromspannungswandler SSW und dessen Ausgang mit dem Rückkoppel- und Steuerkreis RSK verbunden ist. Der Stromspannungswandler SSW erzeugt ein Spannungssignal, das den Abschaltkreis AK ansteuert. Im Überlast- bzw. Kurzschlußfall wirkt der Abschaltkreis AK derart auf den Rückkoppel- und Steuerkreis RSK, daß dieser die Schwingung des Halbbrückenwandlers unterbricht.

Figur 2 zeigt ebenfalls ein Prinzipschaltbild eines erfindungsgemäßen elektronischen Konverters. Im Unterschied zu Figur 1 beinhaltet diese Variante zusätzlich eine Frequenzanpaßschaltung (nicht explizit dargestellt), die mit dem Stromspannungswandler der Detektorschaltung zu einer Frequenzanpaß- und Detektorschaltung FDK ergänzt ist. Die Frequenzanpaß- und Detektorschaltung FDK ist einerseits mit dem Steueranschluß eines Brückenschalters S1 verbunden und wirkt im oberen Bereich der Anschlußleistung einem Absinken der Wandlerfrequenz entgegen. Andererseits ist die Frequenzanpaß- und Detektorschaltung FDK mit dem Abschaltkreis AK verbunden und bewirkt, entsprechend der in Figur 1 beschriebenen Funktionsweise, im Überlast- bzw. Kurzschlußfall ein Unterbrechen der Schwingung des Halbbrückenwandlers.

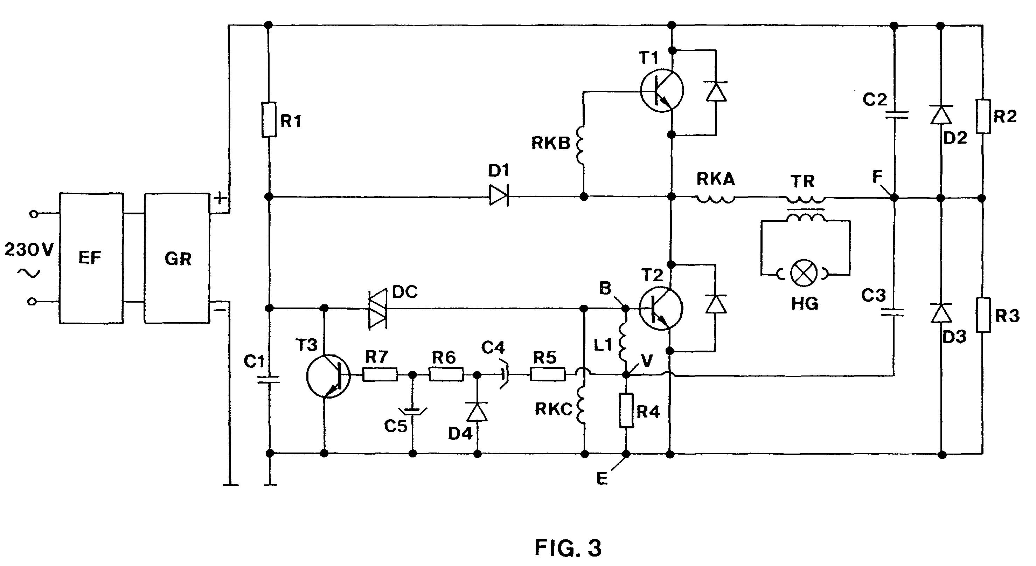

Figur 3 zeigt ein elektrisches Schaltbild eines erfindungsgemäßen elektronischen Konverters für den Betrieb von Niedervolt-Halogenglühlampen. Die Schaltungsanordnung beinhaltet u.a. eine Überlast-Detektorschaltung bzw. einen Überlast-Abschaltkreis sowie eine Frequenzanpaßschaltung und weist folgende Merkmale auf: ein Eingangsfilter EF zur Unterdrückung von Gegentakt-Störströmen, einen Gleichrichter GR, dessen Minuspol mit dem Massepotential der Schaltung verbunden und im folgenden das Bezugspotential ist, einen Triggergenerator, bestehend aus dem Widerstand R1, dem Ladekondensator C1 und dem Diac DC, einen selbsterregten stromrückgekoppelten Halbbrückenwandler ― er besteht im wesentlichen aus den beiden Halbbrückentransistoren T1,T2, dem Halbbrückenkondensator C2 und dem Steuertransformator RKA-RKC für die Stromrückkopplung ―, einen Leistungsübertrager TR, an dessen Sekundärwicklung eine Niedervolt-Halogenglühlampe HG betrieben wird, eine Frequenzanpaßschaltung, bestehend aus einer Reihenschaltung der Drossel L1 und dem Widerstand R4 sowie aus dem Abzweigkondensator C3, eine Überlast-Detektorschaltung, bestehend aus dem Widerstand R4 der Frequenzanpaßschaltung, der hier in seiner zweiten Funktion als Stromspannungswandler zur Erzeugung des Detektionssignals wirkt sowie ein Abschaltkreis mit vorgeschalteter Signalfomungsschaltung, bestehend aus einer Inverterschaltung mit dem Widerstand R5, dem Kondensator C4 und der Diode D4, einem Verzögerungs- und Halteglied, bestehend aus den Kondensatoren C4, C5 und den beiden Widerständen R6 und R7 sowie einem Abschaltetransistor T3. Eine detaillierte Erläuterung der Funktionsweise der Signalfomungsschaltung bzw. des Abschaltkreises findet man in der EP 0 647 084 A1.

In einer Variante werden statt des negativen die positiven Anteile des Detektionssignals zur Ansteuerung des Abschaltkreises verwendet. In diesem Fall enthält die Signalfomungsschaltung keine Inverterschaltung.

Der Abzweigkondensator C3 ist mit dem Verbindungspunkt V zwischen Drossel L1 und Widerstand R4 einerseits sowie dem Fußpunkt F des mit dem Pluspol des Gleichrichters verbundenen Halbbrückenkondensators C2 andererseits kontaktiert und wirkt gleichzeitig als zweiter Halbbrückenkondensator. Der drosselseitige Anschluß der Reihenschaltung ist im Punkt B mit der Basis und der widerstandsseitige Anschluß ist im Punkt E mit dem Emitter des mit dem Massepotential kontaktierten Halbbrückentransistors T2 verbunden. Eine detaillierte Erläuterung der Funktionsweise der Frequenzanpaßschaltung findet man in der EP 0 707 436 A2.

Die Auslegung von Eingangsfiltern ist z.B. in H.-J. Meyer, "Stromversorgungen für die Praxis", Vogel Buchverlag, Würzburg, 1989, S. 115-116 beschrieben. Der Gleichrichter GR besteht im wesentlichen aus einer Diodenvollbrücke (siehe z.B. W. Hirschmann und A. Hauenstein, "Schaltnetzteile", Siemens AG, 1990, S. 102) und wandelt die Wechselspannung des Netzes in eine pulsierende Gleichspannung +*U*_{*B*}.

## Patentansprüche

1. Schaltungsanordnung zum Betreiben von elektrischen Glühlampen, insbesondere von Niedervolt-Halogenglühlampen, an einem Wechselspannungsnetz oder einer Gleichspannungsquelle mit
- einem zwei steuerbare Halbbrückenschalter (S1, S2; T1, T2) aufweisenden und über einen Steuerübertrager (RKA-RKC) stromrückgekoppelten selbstschwingenden Halbbrückenwandler,
- zwei Halbbrückenkondensatoren (C2, C3),
- einem Leistungsübertrager (LÜ; TR), dessen Primärwicklung einerseits an den Steuerübertrager (RKA-RKC) gekoppelt ist sowie andererseits mit dem Verbindungspunkt (F) der beiden Halbbrückenkondensatoren (C2, C3) kontaktiert ist und an dessen Sekundärwicklung die Glühlampe(n) (HG) angeschlossen ist (sind),
- einer Überlast-Detektorschaltung (SSW; R4),
- einem mit der Überlast-Detektorschaltung(SSW; R4) verbundenen Abschaltkreis (AK; T3), der im Überlast- bzw. Kurzschlußfall den Halbbrückenwandler zumindest vorübergehend abschaltet,
**dadurch gekennzeichnet, daß** die Überlast-Detektorschaltung aus einem Stromspannungswandler (SSW; R4) besteht, der seriell zwischen einem ersten (C3) der beiden Halbbrückenkondensatoren (C2, C3) und dem Bezugspotential (-) des Halbbrückenwandlers geschaltet ist derart, daß der Verbindungspunkt (V) zwischen dem ersten Halbbrückenkondensator (C3) und dem Stromspannungswandler (SSW; R4) verschieden ist von dem Verbindungspunkt (F) zwischen den beiden Halbbrückenkondensatoren (C2, C3) und wobei der Verbindungspunkt (V) zwischen dem ersten Halbbrückenkondensator (C3) und dem Stromspannungswandler (SSW; R4) mit dem Abschaltkreis (AK; T3) verbunden ist.

2. Schaltungsanordnung nach Anspruch 1, **dadurch gekennzeichnet, daß** der Stromspannungswandler (SSW) ein ohmscher Widerstand (R4) ist.

3. Schaltungsanordnung nach Anspruch 2, **dadurch gekennzeichnet, daß** der Wert des Widerstandes (R4) im Bereich zwischen ca. 0,1 Ω und 10 Ω, bevorzugt im Bereich zwischen ca. 0,3 Ω und 3 Ω liegt.

4. Schaltungsanordnung nach Anspruch 1, **dadurch gekennzeichnet, daß** die beiden steuerbaren Halbbrückenschalter (S1, S2) Transistoren (T1, T2) sind.

5. Schaltungsanordnung nach Anspruch 2 und 4, **dadurch gekennzeichnet, daß** die Schaltungsanordnung zusätzlich eine im oberen Bereich der Anschlußleistung einem Absinken der Wandlerfrequenz entgegenwirkende Frequenzanpaßschaltung enthält, bestehend aus dem Widerstand (R4) und einer dazu in Reihe geschalteten zusätzlichen Drossel (L1), wobei der drosselseitige Anschluß der Reihenschaltung mit der Basis (B) und der widerstandsseitige Anschluß mit dem Emitter (E) des mit Bezugspotential (-) verbundenen Halbbrückentransistors (T2) kontaktiert ist, so daß der Verbindungspunkt (V) zwischen Drossel (L1) und Widerstand (R2) einerseits mit dem Abschaltkreis (AK) und andererseits mit dem ersten Halbbrückenkondensator (C2) verbunden ist.

6. Schaltungsanordnung nach Anspruch 5, **dadurch gekennzeichnet, daß** der Wert der Drossel (L1) im Bereich zwischen ca. 1 µH und 100 µH liegt, bevorzugt im Bereich zwischen ca. 10 µH und 30 µH.

7. Schaltungsanordnung nach Anspruch 5, **dadurch gekennzeichnet, daß** der Widerstand (R4) in SMD(Surface Mounted Device)-Technik und die Drossel (L1) als Stabkerndrossel realisiert ist.

8. Schaltungsanordnung nach Anspruch 1, **dadurch gekennzeichnet, daß** der Abschaltkreis (AK) als Abschaltelement einen Transistor (T3) enthält, dessen Basis, gegebenenfalls über eine Basisbeschaltung zur Signalformung, mit dem Verbindungspunkt (V) zwischen erstem Brükkenkondensator (C3) und Stromspannungswandler (SSW; R4) verbunden ist.

## Claims

1. Circuit arrangement for operating electric incandescent lamps, in particular low-voltage halogen incandescent lamps, on an AV voltage network or a DC voltage source, comprising
- a self-oscillating half-bridge converter having two controllable half-bridge switches (S1, S2; T1, T2) and with current feedback via a control transformer (RKA-RKC),
- two half-bridge capacitors (C2, C3),
- a power transformer (LÜ; TR) whose primary winding is, on the one hand, coupled to the control transformer (RKA-RKC) and, on the other hand, makes contact with the connection point (F) of the two half-bridge capacitors (C2, C3), and to whose secondary winding the incandescent lamp(s) (HG) is(are) connected,
- an overload detector circuit (SSW; R4), and
- a switch-off circuit (AK; T3) which is connected to the overload detector circuit (SSW; R4) and switches off the half-bridge converter at least temporarily in the case of overloading and/or short circuiting,
**characterized in that** the overload detector circuit consists of a current-to-voltage converter (SSW; R4) which is connected serially between the first (C3) of the two half-bridge capacitors (C2, C3) and the reference potential (-) of the half-bridge converter in such a way that the connection point (V) between the first half-bridge capacitor (C3) and the current-to-voltage converter (SSW; R4) differs from the connection point (F) between the two half-bridge capacitors (C2, C3), and in which the connection point (V) between the first half-bridge capacitor (C3) and the current-to-voltage converter (SSW; R4) is connected to the switch-off circuit (AK; T3).

2. Circuit arrangement according to Claim 1, **characterized in that** the current-to-voltage converter (SSW) is an ohmic resistor (R4).

3. Circuit arrangement according to Claim 2, **characterized in that** the value of the resistor (R4) is in the range between approximately 0.1 Ω and 10 Ω, preferably in the range between approximately 0.3 Q and 3 Ω.

4. Circuit arrangement according to Claim 1, **characterized in that** the two controllable half-bridge switches (S1, S2) are transistors (T1, T2).

5. Circuit arrangement according to Claims 2 and 4, **characterized in that** the circuit arrangement additionally includes a frequency matching circuit which counteracts a lowering of the converter frequency in the upper range of the connection power and consists of the resistor (R4) and an additional inductor (L1) connected in series therewith, the inductor-side connection of the series circuit making contact with the base (B), and the resistor-side connection making contact with the emitter (E) of the half-bridge transistor (T2) connected to reference potential (-), such that the connection point (V) between the inductor (L1) and resistor (R2) is connected to the switch-off circuit (AK), on the one hand, and to the first half-bridge capacitor (C2), on the other hand.

6. Circuit arrangement according to Claim 5, **characterized in that** the value of the inductor (L1) is in the range between approximately 1 µH and 100 µH, preferably in the range between approximately 10 µH and 30 µH.

7. Circuit arrangement according to Claim 5, **characterized in that** the resistor (R4) is implemented using SMD (Surface Mounted Device) technology, and the inductor (L1) is implemented as a bar-core inductor.

8. Circuit arrangement according to Claim 1, **characterized in that** the switch-off circuit (AK) includes as switch-off element a transistor (T3) whose base is connected, if appropriate via a base circuit for signal shaping, to the connection point (V) between a first bridge capacitor (C3) and the current-to-voltage converter (SSW; R4).

## Revendications

1. Circuit d'alimentation de lampes électriques à incandescence, notamment de lampes à incandescence à halogène à basse tension, par un réseau de tension alternative ou par une source de tension continue comprenant
- un convertisseur à demi-pont à auto-oscillation comportant deux commutateurs (S1, S2 ; T1, T2) du demi-pont qui peuvent être commandés et à rétroaction de courant par l'intermédiaire d'un transformateur (RKA-RKC) de commande,
- deux condensateurs (C2, C3) du demi-pont,
- un transformateur (LÜ ; TR) de puissance, dont l'enroulement primaire est couplé d'une part au transformateur (RKA-RKC) de commande en étant en contact d'autre part avec le point (F) de liaison des deux condensateurs (C2, C3) du demi-pont et à l'enroulement secondaire duquel est (sont) raccordé(s) la (les) lampe(s) (HG) à incandescence,
- un circuit (SSW ; R4) à détecteur de surcharge,
- un circuit (AK ; T3) de coupure relié au circuit (SSW ; R4) à détecteur de surcharge et qui déconnecte au moins temporairement le convertisseur à demi-pont s'il se produit une surcharge ou un court-circuit,
**caractérisé en ce que** le circuit à détecteur de surcharge est constitué d'un transducteur (SSW ; R4) courant-tension qui est monté en série entre un premier (C3) des deux condensateurs (C2, C3) à demi-pont et le potentiel (-) de référence du convertisseur à demi-pont, de façon que le point (V) de liaison entre le premier condensateur (C3) à demi-pont et le transducteur (SSW ; R4) courant-tension soit différent du point (F) de liaison entre les deux condensateurs (C2, C3) du demi-pont, tandis que le point (V) de liaison compris entre le premier condensateur (C3) du demi-pont et le transducteur (SSW ; R4) courant-tension est relié au circuit (AK ; T3) de coupure.

2. Circuit suivant la revendication 1, **caractérisé en ce que** le transducteur (SSW) courant-tension est une résistance (R4) ohmique.

3. Circuit suivant la revendication 2 **caractérisé en ce que** la valeur de la résistance (R4) est comprise entre environ 0,1 **Ω** et 10 Ω et de préférence est comprise entre environ 0,3 Ω et 3 Ω.

4. Circuit suivant la revendication 1, **caractérisé en ce que** les deux commutateurs (S1, S2) du demi-pont qui peuvent être commandés sont des transistors (T1, T2).

5. Circuit suivant la revendication 2 et 4, **caractérisé en ce que** le circuit comprend en outre un circuit d'adaptation de la fréquence s'opposant, dans la plage supérieure de la puissance raccordée, à une diminution de la fréquence du convertisseur et est constitué de la résistance (R4) et d'une bobine (L1) supplémentaire montée en série avec celle-ci; la borne du côté de la bobine du circuit série étant en contact avec la base (B) et la borne du côté de la résistance étant en contact avec l'émetteur (E) du transistor (T2) du demi-pont relié au potentiel (-) de référence, de sorte que le point (V) de liaison compris entre la bobine (L1) et la résistance (R2) est relié d'une part au circuit (AK) de coupure et d'autre part au premier condensateur (C2) du demi-pont.

6. Circuit suivant la revendication 5, **caractérisé en ce que** la valeur de la bobine (L1) est comprise entre environ 1 µH et 100 µH et de préférence est comprise entre environ 10 µH et 30 µH.

7. Circuit suivant la revendication 5, **caractérisé en ce que** la résistance (R4) est réalisée en technique SMD (Surface Mounted Device) et la bobine (L1) en bobine à noyau sous forme de barreau.

8. Circuit suivant la revendication 1, **caractérisé en ce que** le circuit (AK) de coupure comporte comme élément de coupure un transistor (T3) dont la base est reliée le cas échéant par un circuit de base pour la formation du signal au point (V) de liaison compris entre le premier condensateur (C3) du pont et le transducteur (SSW ; R4) courant-tension.
